Europäisches Patentamt

European Patent Office

Office européen des brevets

(11) Veröffentlichungsnummer: **0 162 142**
**A2**

# (12) EUROPÄISCHE PATENTANMELDUNG

(21) Anmeldenummer: 84115544.3

(22) Anmeldetag: 15.12.84

(51) Int. Cl.⁴: **B 60 K 15/02**

(30) Priorität: 21.12.83 DE 3346103

(43) Veröffentlichungstag der Anmeldung:
27.11.85 Patentblatt 85/48

(84) Benannte Vertragsstaaten:
DE FR GB SE

(71) Anmelder: **AUDI NSU AUTO UNION**
**AKTIENGESELLSCHAFT**
**Postfach 1144**
**D-7107 Neckarsulm(DE)**

(72) Erfinder: **Brand, Martin**
**Nansenstrasse 21**
**D-8070 Ingolstadt(DE)**

(74) Vertreter: **Speidel, Eberhardt**
**Postfach 1320 Waldpromenade 26**
**D-8035 Gauting(DE)**

(54) Entlüftungseinrichtung für den Kraftstofftank eines Kraftfahrzeuges.

(57) Eine Entlüftungseinrichtung für den Kraftstofftank 2 eines Kraftfahrzeuges weist eine Entlüftungsleitung 3 auf, die den Tank 2 über ein Kraftstoffdampffilter 4 mit der Atmosphäre verbindet. Zur Regenerierung des Filters 4 ist dieser über eine Absaugleitung 5 mit dem Ansaugsttem 6 der Fahrzeug-Brennkraftmaschine 1 verbunden, sodaß bei laufender Maschine 1 Luft durch das Filter 4 gesaugt und dabei der Kraftstoffdampf mitgenommen wird. Um bei stehender Maschine das Ansammeln von Kraftstoffdämpfen in dem Ansaugsystem 6 zu verhindern und insbesondere im Leerlauf ein Überfetten des der Brennkraftmaschine 1 zugeführten Kraftstoff-Luftgemisches durch das durch die Absaugleitung 5 angesaugte Kraftstoff- Luftgemisch zu vermeiden, ist in der Absaugleitung 5 ein Ventil 7 angeordnet, das bei stehender Brennkraftmaschine 1 geschlossen ist und mit steigender Drehzahl die Absaugleitung 5 in zunehmendem Maße freigibt, sodaß bei niedriger Drehzahl nur eine geringe Menge abgesaugt wird, jedoch ab einer bestimmten Drehzahl so viel Luft durch das Filter 4 gesaugt wird, daß eine wirkungsvolle Regenerierung desselben eintritt.

./...

EP 0 162 142 A2

FIG. 1

0162142

Entlüftungseinrichtung für den Kraftstofftank eines
Kraftfahrzeuges

---

Die Erfindung bezieht sich auf eine Entlüftungseinrichtung
für den Kraftstofftank eines Kraftfahrzeuges entsprechend
dem Oberbegriff des Anspruchs 1.

Eine derartige Entlüftungseinrichtung ist beispielsweise
durch die DE-AS 20 56 087 bekannt geworden.

Der Kraftstoffdampffilter, meist ein Aktivkohlefilter, hat
die Aufgabe, das Entweichen von Kraftstoffdämpfen in die
Atmosphäre zu verhindern, indem die HC-Moleküle in dem
Filter eingelagert werden. Da die Speicherfähigkeit des
Filters begrenzt ist, wird das Filter bei laufender Brennkraftmaschine mit Frischluft durchspült, die durch die Absaugleitung von der Brennkraftmaschine angesaugt wird. Um
zu vermeiden, daß im Leerlauf der Brennkraftmaschine eine
unzulässige Anfettung des Kraftstoff-Luftgemisches durch
die angesaugten Kraftstoffdämpfe eintritt, wurde bisher der
Querschnitt der Absaugleitung an mindestens einer Stelle
so klein bemessen, daß die Menge der angesaugten Kraftstoffdämpfe auf ein den Leerlaufbetrieb nicht negativ beeinflussendes Maß begrenzt ist. Diese Drosselung der Absaugleitung führt aber andererseits dazu, daß der Luftdurchsatz durch das Filter auch bei hohen Drehzahlen begrenzt
ist, sodaß die Regenerierung des Filters beeinträchtigt
ist.

Der Erfindung liegt die Aufgabe zugrunde, eine Entlüftungseinrichtung der angegebenen Art zu schaffen, mit der eine
bessere Regenerierung des Kraftstoffdampffilters erreicht
wird. Diese Aufgabe wird erfindungsgemäß durch die im Kennzeichen des Anspruchs 1 angegebenen Merkmale gelöst.

Durch die Erfindung wird erreicht, daß mit steigender Drehzahl der Querschnitt der Absaugleitung zunehmend freigegeben wird, sodaß in zunehmendem Maße Luft durch den Kraftstoffdampffilter gesaugt und dieser somit schnell und gründlich regeneriert wird, ohne daß das Mischungsverhältnis des angesaugten Kraftstoff-Luftgemisches im Leerlaufbetrieb negativ beeinflußt wird.

Vorzugsweise ist das Ventil ein elektromagnetisches Taktventil, das mit gepulstem Gleichstrom mit drehzahlabhängig veränderlicher Impulsbreite versorgt wird. Ein solches Ventil besteht aus einem Elektromagneten, der beim Einschalten eines Gleichstroms einen Schieber entgegen der Kraft einer Feder anzieht. Pulst man nun diesen Strom mit einer konstanten Frequenz, so beginnt das Feder-Schieber-System zu schwingen. Der Schieber öffnet bzw. schließt die Absaugleitung. Über die Veränderung der Impulsbreite lassen sich variable Luftdurchsätze durch das Ventil erreichen.

Das Ventil ist vorzugsweise so ausgebildet, daß es bei stehender Brennkraftmaschine die Absaugleitung vollkommen absperrt. Dadurch wird verhindert, daß sich bei hohen Außentemperaturen vor dem Starten der Brennkraftmaschine in dem Ansaugsystem Kraftstoffdämpfe ansammeln, die beim Starten eine Überfettung des angesaugten Gemisches verursachen und dadurch den Startvorgang erschweren.

Alternativ könnte natürlich auch ein eigenes Absperrventil in der Absaugleitung angeordnet werden, das nur die Aufgabe hat, die Absaugleitung bei nicht laufender Brennkraftmaschine abzusperren, ansonsten jedoch voll geöffnet ist. Auch hier bietet sich die Verwendung eines elektromagnetischen Ventils an, das beim Einschalten der Zündung in seine Offenstellung gebracht wird.

Ein Ausführungsbeispiel der Erfindung wird im folgenden unter Bezugnahme auf die Zeichnung beschrieben.

Fig. 1 zeigt in schematischer Darstellung das Kraftstoff-Versorgungssystem einer Fahrzeug-Brennkraftmaschine mit einer erfindungsgemäßen Entlüftungseinrichtung, und

Fig. 2 zeigt im Schnitt schematisch ein in der Absaugleitung angeordnetes Magnetventil.

Die Brennkraftmaschine 1 eines Fahrzeuges wird aus einem Kraftstofftank 2 über eine nicht gezeigte Kraftstoffleitung mit Pumpe mit Kraftstoff versorgt. Von dem Kraftstoffbehälter 2 geht eine Entlüftungsleitung 3 aus, die über ein Kraftstoffdampffilter 4, beispielsweise ein Aktivkohlefilter, mit der Atmosphäre verbunden ist. Der Filter 4 hält den Kraftstoff fest, sodaß verhindert ist, daß Kraftstoffdämpfe in die Atmosphäre entweichen können. Zur Regenerierung des Filters 4 ist dieser über eine Absaugleitung 5 mit dem Ansaugsystem 6 der Brennkraftmaschine 1 verbunden. Über diese Leitung 5 wird bei laufender Brennkraftmaschine Luft durch das Filter 4 hindurch angesaugt und dabei der im Filter 4 befindliche Kraftstoff mitgenommen.

Um zu vermeiden, daß durch das Kraftstoff-Luftgemisch, das durch die Absaugleitung 5 angesaugt wird, insbesondere im Leerlauf und im unteren Teillastbetrieb eine Überfettung des der Brennkraftmaschine 1 zugeführten Kraftstoff-Luftgemisches eintritt, ist in der Leitung 5 ein in Abhängigkeit von der Drehzahl der Brennkraftmaschine 1 gesteuertes Ventil 7 angeordnet, das bei stehender Brennkraftmaschine 1 die Absaugleitung 5 absperrt und diese Leitung mit steigender Drehzahl zunehmend öffnet. Dieses Ventil 7 ist vorzugsweise ein Elektromagnetventil, das mit gepulstem Strom mit konstanter Frequenz, jedoch in Abhängigkeit von der Maschinendrehzahl veränderlicher Impulsbreite versorgt wird. Zu diesem Zweck ist in der Anschlußleitung 8 des Elektromagneten ein Zerhacker 9 zur Erzeugung eines Wechselstromes aus dem Gleichstrom der Fahrzeugbatterie 10 und ein Steuergerät 11 zur Impulsbreitenmodulation vorgesehen, das ein drehzahlabhängiges Signal erhält. In der Leitung 8 ist ferner ein Schalter 12 angeordnet, der bei ausgeschalteter Zündung geöffnet ist.

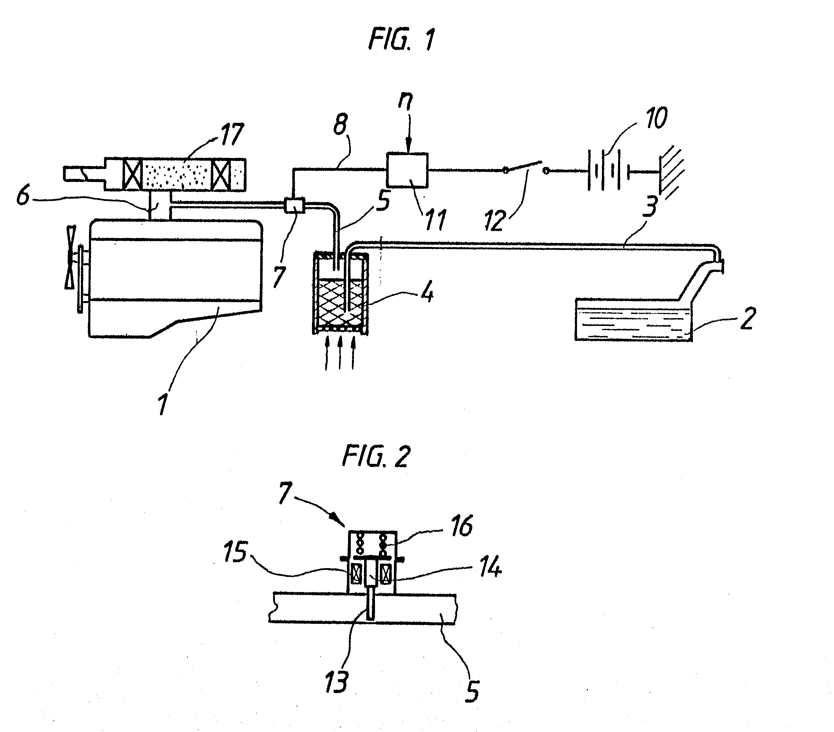

Das Ventil 7ist in Fig. 2 schematisch in größerem Maßstab dargestellt. Es weist einen Absperrschieber 13 auf, der an einem Anker 14 angebracht ist, welcher bei Stromdurchfluß durch die Spule 15 in der Zeichnung nach oben gezogen wird, und zwar entgegen der Wirkung einer Feder 16, welche bestrebt ist, den Schieber 13 in der Schließstellung zu halten. Ist der Stromkreis der Spule 15 durch Öffnen des Schalters 12 unterbrochen, wird der Schieber 13 durch die Feder 16 in seine Schließstellung gedrückt. Dadurch wird verhindert, daß bei stillstehender Brennkraftmaschine 1 Kraftstoffdämpfe durch die Leitung 5 in das Ansaugsystem der Brennkraftmaschine gelangen, sich dort ansammeln und das Starten der Brennkraftmaschine erschweren, da hierdurch ein stark überfettetes Gemisch erzeugt wird. Bei laufender Brennkraftmaschine, also geschlossenem Schalter 12, wird die Spule 15 mit gepulstem Strom konstanter Frequenz versorgt, wodurch das Feder-Masse (Schieber 13, Anker 14)-System zu schwingen beginnt und die Absaugleitung 5 abgesperrt bzw. freigegeben wird. Durch die Veränderung der Impulsbreite entsprechend der Maschinendrehzahl mit Hilfe des Steuergerätes 11 wird die Absaugleitung 5 mit steigender Drehzahl zunehmend freigegeben, sodaß ab einer bestimmten Drehzahl keine Drosselung durch den Schieber 13mehr stattfindet und eine so große Luftmenge durch das Filter 14 gesaugt werden kann, daß eine ausreichende Regenerierung desselben stattfindet.

Da bekanntlich das Aktivkohlefilter 4 sehr schnell unwirksam wird, wenn es mit flüssigem Kraftstoff in Berührung kommt, ist es zweckmäßig, in der Entlüftungsleitung 3 möglichst nahe des Filters 4 oder gegebenenfalls sogar mit diesem integriert einen Abscheider für flüssigen Kraftstoff vorzusehen, der in geeigneter Weise an die Absaugleitung 5 angeschlossen wird. Dieser Abscheider wie auch der Filter 4 sind zweckmäßiger Weise an einer Stelle im Motorraum des Fahrzeuges angeordnet, wo sie der Motorwärme ausgesetzt sind, um das Verdampfen des Kraftstoffes im Abscheider bzw. das Austreiben der Kraftstoffdämpfe aus dem Filter 4 zu beschleunigen.

Die durch den Filter 4 angesaugte Luft kann gefiltert sein, indem sie beispielsweise dem Ansaugsystem der Brennkraftmaschine stromabwärts des üblichen Luftfilters 17 entnommen wird.

267/83

AUDI NSU AUTO UNION AKTIENGESELLSCHAFT, 7107 Neckarsulm

Entlüftungseinrichtung für den Kraftstofftank eines Kraftfahrzeuges

P a t e n t a n s p r ü c h e

1. Entlüftungseinrichtung für den Kraftstofftank eines Kraftfahrzeuges, mit einer Entlüftungsleitung, die den Tank
über ein Kraftstoffdampffilter mit der Atmosphäre verbindet, und einer Absaugleitung, durch die Kraftstoffdämpfe aus dem Filter in das Ansaugsystem der Fahrzeug-
Brennkraftmaschine gesaugt werden, d a d u r c h g e -
k e n n z e i c h n e t , daß in der Absaugleitung (5)
ein sich mit steigender Maschinendrehzahl zunehmend öffnendes Ventil (7) angeordnet ist.

2. Entlüftungseinrichtung nach Anspruch 1, dadurch gekennzeichnet, daß das Ventil (7) ein elektromagnetisches
Taktventil ist, das mit gepulstem Gleichstrom mit drehzahlabhängig veränderlicher Impulsbreite versorgt wird.

FIG. 1

FIG. 2